# FASCICULE DE BREVET EUROPEEN

(11) **EP 2 320 532 B1**
(45) Date de publication et mention de la délivrance du brevet: **14.11.2012**
(21) Numéro de dépôt: 10290555.1
(22) Date de dépôt: 15.10.2010
(51) Int. Cl.: H02B 1/42

(54) **Dispositif de montage d'un montant de châssis sur le fond d'un coffret électrique et coffret électrique comprenant un tel dispositif**
Vorrichtung zur Montage eines Pfostens am hinteren Teil eines Stromverteilungskastens, und mit einer solchen Vorrichtung ausgestatteter Stromverteilungskasten
Device for installing a frame upright on the bottom of an electric box and electric box including such a device

(30) Priorité: 05.11.2009 FR 0905315
(43) Date de publication de la demande: 11.05.2011
(73) Titulaire: Legrand France, 87000 Limoges (FR); Legrand SNC, 87000 Limoges (FR)
(72) Inventeur: Baudou, Alain, 87000 Limoges (FR)
(74) Mandataire: Orsini, Fabienne

(56) Documents cités:
- DE-C1- 4 200 315
- DE-U1- 29 808 253
- DE-U1- 29 808 254

## Description

La présente invention concerne de manière générale les coffrets ou les tableaux électriques.

Elle concerne plus particulièrement un dispositif de montage d'un montant de châssis sur le fond d'un coffret ou d'un tableau électrique conforme au préambule de la revendication 1.

Elle concerne également un ensemble comprenant un montant se présentant sous la forme d'un profilé et un tel dispositif de montage, ainsi qu'un coffret électrique comprenant un boîtier qui loge un châssis rapporté sur le fond du boîtier par de tels dispositifs de montage.

### ARRIERE-PLAN TECHNOLOGIQUE

On connaît déjà divers dispositifs de montage d'un montant de châssis sur le fond d'un coffret ou d'un tableau électrique.

On connaît par exemple des coffrets électriques dont le boîtier loge un châssis avec des montants verticaux dont les extrémités libres sont vissées sur des supports encliquetés sur le fond du boîtier.

L'inconvénient majeur de ces coffrets est que le blocage du châssis contre le fond du coffret impose l'utilisation de vis et l'intervention d'un outil de vissage.

On connaît du document DE29808253U un dispositif de montage d'un montant d'un châssis comportant une embase qui reçoit une extrémité libre du montant et un verrou monté à rotation sur cette embase.

On connaît également du document DE4200315 un dispositif de montage d'un montant d'un châssis comportant une embase sur laquelle est fixée une extrémité libre du montant à l'aide de moyens de vissage.

Dans ce dispositif, le montant comporte une cheminée taraudée qui s'élève en saillie de l'une de ces faces, perpendiculairement à l'axe longitudinal du montant. L'embase comporte une ouverture adaptée au passage de cette cheminée lorsque le montant est disposé sur l'embase. La cheminée fait alors saillie de l'embase à travers cette ouverture.

Il est prévu une plaquette qui s'enfile autour de la cheminée et qui est bloquée contre l'embase par le serrage d'une rondelle lors du vissage de la vis dans la cheminée taraudée. Ce vissage s'effectue selon une direction perpendiculaire à l'axe longitudinal du montant et de l'embase. Lorsque la vis est vissée, l'embase est prise en sandwich entre le montant et la plaquette.

Ce dispositif est complexe puisqu'il fait intervenir trois éléments de montage distincts : vis, rondelle et plaquette. En outre, ces trois éléments n'étant pas reliés au montant ni à l'embase, il existe un risque de perte lors du stockage et du montage.

On connaît enfin du document DE29808254U, un dispositif de montage d'un montant de châssis conforme au préambule de la revendication 1.

Dans ce document, le verrou comporte un insert fixé à l'extrémité libre du montant, dans lequel une partie interne coulisse. Cette partie interne est rappelée par un ressort dans une position stable dans laquelle elle fait saillie du montant et s'insère dans un orifice de l'embase. Le verrou est alors emprisonné entre l'embase et le montant.

Cette partie interne peut être déplacée manuellement contre la force du ressort vers l'intérieur du montant pour libérer celui-ci de l'embase.

Un tel dispositif est peu pratique à utiliser car la position de libération du montant n'est pas stable et le verrou doit être maintenu manuellement dans sa position de libération pendant le retrait du montant.

### OBJET DE L'INVENTION

Par rapport à l'état de la technique précité, la présente invention propose un nouveau dispositif de montage d'un montant sur le fond d'un coffret sans outils.

Plus particulièrement, l'invention propose un dispositif de montage d'un montant de châssis sur le fond d'un coffret ou d'un tableau électrique tel que décrit dans la revendication 1.

D'autres caractéristiques non limitatives et avantageuses du dispositif de montage conforme à l'invention sont énoncées dans les revendications 2 à 12.

L'invention propose également un ensemble tel que décrit dans la revendication 13.

L'invention propose encore un coffret électrique tel que décrit dans la revendication 14.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique éclatée en perspective d'un coffret électrique selon l'invention ;
- la figure 2 est une vue schématique de face du coffret électrique de la figure 1 assemblé ;
- la figure 3 est une vue en perspective d'un montant de châssis du coffret électrique de la figure 1 ;
- la figure 4 est une vue de détail d'une extrémité libre du montant de la figure 3 ;
- la figure 5 est une vue en loupe du détail A de la figure 2 ;
- les figures 6 et 7 sont de vues schématiques en perspective du dispositif de montage conforme à l'invention, rapporté sur l'extrémité libre d'un montant de châssis et positionné dans chacune de ses deux positions stables ;
- la figure 8 est une vue schématique en perspective de l'embase du dispositif de montage selon l'invention ;
- la figure 9 est une vue de face de l'embase de la figure 8 ;
- la figure 10 est une vue en coupe longitudinale de l'embase de la figure 8 ;
- la figure 11 est une vue schématique en perspective du verrou du dispositif de montage selon l'invention ;
- la figure 12 est une vue de face du verrou de la figure 11 ;
- les figures 13 à 16 et 18 sont des vues schématiques en perspective des différentes étapes de montage et d'assemblage du dispositif de montage selon l'invention sur le fond du coffret électrique de la figure 1 ;
- la figure 17 est une vue en coupe longitudinale du dispositif de montage dans la configuration de la figure 16 ;
- la figure 19 est une vue en coupe longitudinale du dispositif de montage selon l'invention, placé dans sa première position stable représentée sur la figure 18 et accueillant l'extrémité libre d'un montant de châssis ;
- la figure 20 est une vue schématique en perspective du dispositif de montage selon l'invention, rapporté sur le fond du coffret électrique de la figure 1 et placé dans sa deuxième position stable, appelée position de montage ;
- la figure 21 est une vue en coupe longitudinale du dispositif de montage selon l'invention dans la configuration de la figure 20 ;
- la figure 22 est une vue schématique en perspective du coffret électrique de la figure 2 avec son châssis pivoté vers le haut ; et
- la figure 23 est une vue schématique en perspective du coffret électrique de la figure 2 avec son châssis pivoté vers le bas.

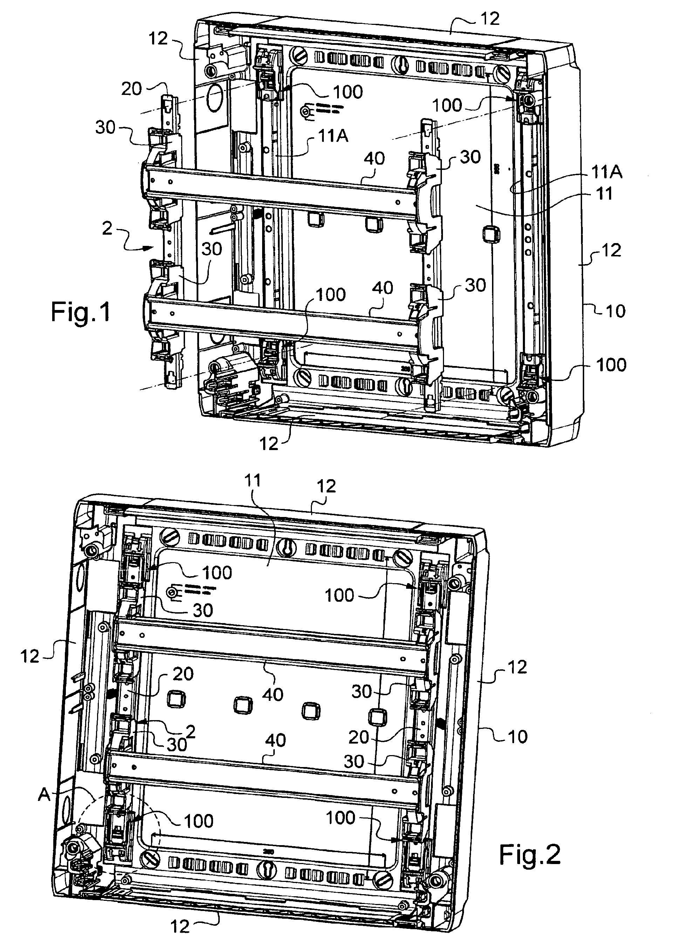

Sur les figures 1 et 2 on a représenté un coffret ou tableau électrique qui comprend ici un boîtier 10 présentant un fond 11 bordé de parois latérales 12 qui s'élèvent perpendiculairement au fond. Le boîtier 10 loge un châssis 2 rapporté sur le fond 11 du boîtier 10 à l'aide de dispositifs de montage 100. Le châssis 2 comprend deux montants 20 verticaux reliés par des rails transversaux 40 parallèles, rapportés sur des supports 30 solidaires desdits montants 20. Les rails transversaux 40 sont destinés à recevoir des appareils électriques disposés en rangée, tels que des appareils modulaires comme des disjoncteurs.

Avantageusement, dans le coffret électrique représenté, il est prévu sur le fond 11 du boîtier 10 quatre dispositifs de montage 100 identiques, coopérant avec les quatre extrémités libres des deux montants 20 du châssis 2.

Ainsi, lorsque le châssis 2 est rapporté sur le fond 11 du boîtier 10 du coffret électrique, il comporte deux ensembles constitués chacun d'un montant 20 équipé à chaque extrémité d'un dispositif de montage 100, ces deux ensembles étant reliés transversalement par les rails transversaux 40.

Les dispositifs de montage sont placés aux bouts de deux nervures 11A parallèles, venues de formation avec le fond 11 du boîtier 10, qui s'étendent chacune le long de deux parois latérales 12 du boîtier 10 et qui servent à positionner correctement les montants 20 du châssis 2 sur le fond 11 du boîtier 10.

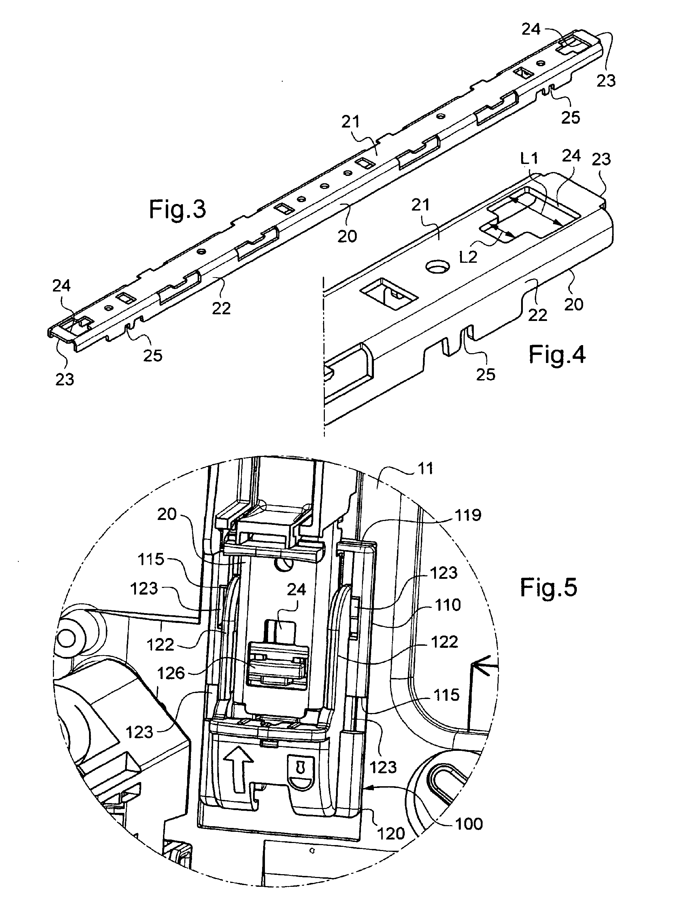

Comme le montrent plus particulièrement les figures 3 et 4, chaque montant 20 du châssis 2, est un profilé en matière métallique, de section en U avec un fond 21 et deux ailes latérales longitudinales 22.

Chaque nervure 11A de positionnement prévue sur le fond 11 du boîtier 10 du coffret électrique (voir figure 1), présente une section carrée de largeur ajustée au jeu près à celle de chaque profilé 20 de sorte que, lorsque le châssis 2 est plaqué contre le fond 11 du boîtier 10, le profilé 20 s'engage sur la nervure 11A et est maintenu latéralement par celle-ci sur ledit fond 11.

À chaque extrémité du montant, le fond 21 du profilé 20 comporte une ouverture 24, de forme globalement rectangulaire, de largeur nominale L1. Le bord de l'ouverture 24 situé à l'opposé du bord situé du côté du bord coupé 23 du profilé 20, est pourvu d'une encoche de largeur L2 inférieure à la largeur nominale L1. En d'autres termes, en s'éloignant du bord coupé 23 du profilé 20, chaque ouverture 24 présente une largeur qui diminue brutalement de la largeur L1 à la largeur L2.

Par ailleurs, à chaque extrémité du montant, les ailes latérales longitudinales 22 du profilé 20 comprennent deux encoches 25 en regard l'une de l'autre.

Selon l'exemple représenté sur les figures, chaque dispositif de montage 100 autorise avantageusement le pivotement du montant 20 correspondant sur le fond du coffret. Mais l'on pourrait prévoir selon une variante plus simple du dispositif de montage conforme à l'invention que ce dernier ne pivote pas sur le fond du coffret.

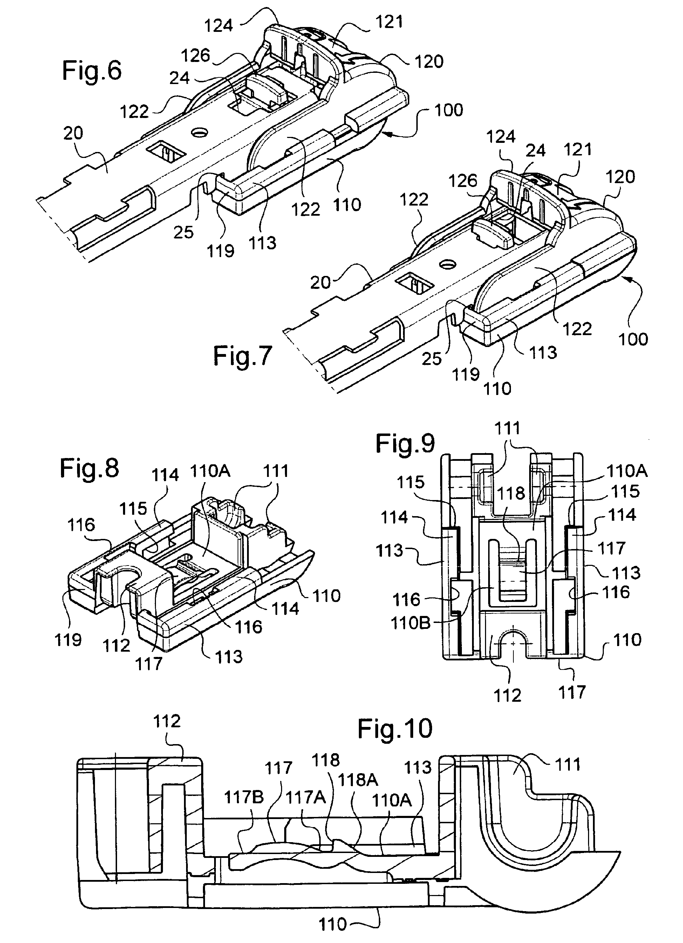

Comme le montrent plus particulièrement les figures 5, 6 et 7, chaque dispositif de montage 100 comporte une embase 110 comportant des moyens de réception d'une extrémité libre du montant 20 correspondant ainsi que des moyens de pivotement sur le fond 11 du coffret, et un verrou 120 adapté à prendre deux positions stables sur l'embase 110, à savoir, une première position stable (voir figures 5 et 6) dans laquelle il laisse libre ladite extrémité dudit montant 20 tout en interdisant le pivotement de l'embase 110, et une deuxième position stable, appelée position de montage (voir figure 7) dans laquelle il emprisonne ladite extrémité dudit montant entre ledit verrou 120 et ladite embase 110 tout en autorisant le pivotement de l'embase 110.

Préférentiellement, le verrou 120 et l'embase 110 de chaque dispositif de montage 100, sont chacun réalisés d'une seule pièce par moulage d'une matière plastique. Ils sont agencés pour être rapportés l'un sur l'autre de manière indémontable.

Ici, l'embase 110 est destinée à être rapportée sur le fond 11 du boîtier 10 du coffret électrique.

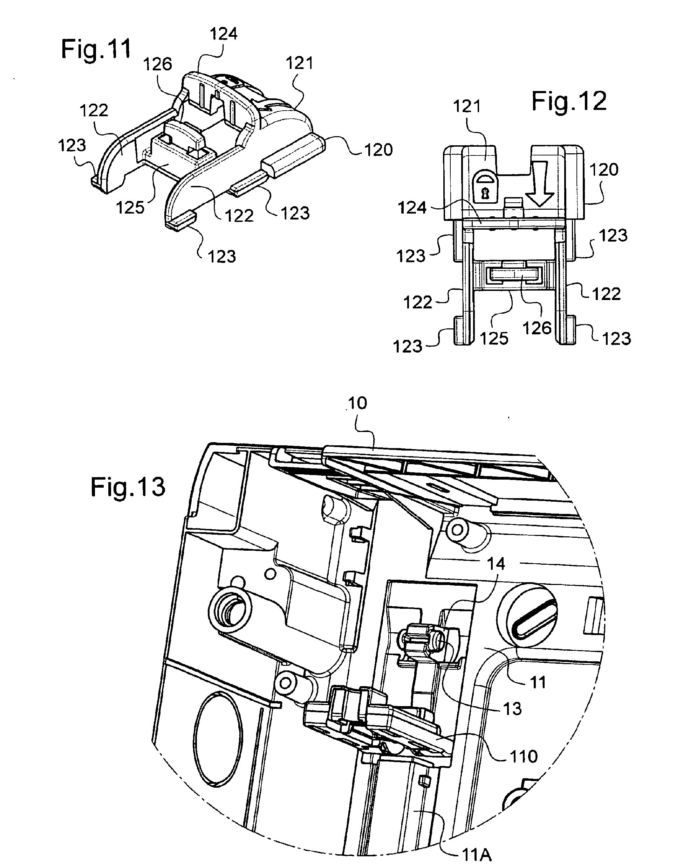

Comme le montrent les figures 8 à 10, l'embase 110 présente ici une forme allongée selon un axe longitudinal, et comporte, à l'arrière, deux logements 111 en regard, dont les fonds sont semi-circulaires, ouverts à l'opposé du fond, formant des paliers de réception d'un axe de pivotement 13 solidaire du fond 11 du boîtier 10 du coffret. L'axe de pivotement 13 est ici encliqueté ou enserré ou encore emboîté entre deux mâchoires prévues à l'extrémité d'un support 14 issu du fond 11 du boîtier 10 (voir figure 13).

De manière générale, l'axe longitudinal de l'embase est parallèle à l'axe longitudinal du montant lorsque celui-ci est en place sur l'embase.

Bien entendu, selon une variante non représentée, on peut prévoir que l'embase comporte un axe de pivotement destiné à s'engager dans un logement ouvert d'accueil prévu sur le fond du coffret.

Selon une autre variante non représentée, on peut prévoir que l'embase est simplement encliquetée de manière fixe sur le fond du boîtier du coffret électrique. Dans ce cas, ladite embase comporte des moyens d'encliquetage destinés à coopérer avec des moyens d'encliquetage complémentaires prévus sur le fond du boîtier.

Selon une autre variante, on peut prévoir que l'embase vient de formation avec le fond du boîtier du coffret électrique.

L'embase 110 comporte, à l'avant, les moyens de réception du montant 20 qui comprennent une plate-forme 112 de support du montant, placée à proximité d'un rebord d'extrémité 119 de l'embase 110, destiné à s'engager dans les encoches 25 prévus dans les ailes latérales longitudinales 22 du montant 20.

La plate-forme 112 est formée par la face supérieure d'un plot carré dont la largeur est égale au jeu près à celle du profilé 20 de sorte que lorsque l'extrémité libre du profilé 20 est rapportée sur l'embase 110, elle s'engage sur le plot qui la maintient latéralement et les encoches 25 du profilé 20 s'engagent sur le rebord d'extrémité avant 119 de l'embase 110 ce qui maintient ainsi ledit profilé selon la direction axiale.

L'embase 110 et le verrou 120 comprennent des moyens de translation complémentaires pour que le verrou 120 puisse être translaté par rapport à l'embase 110 entre les deux positions stables.

Ces moyens de translation comprennent sur l'une des deux pièces constituées par l'embase 110 et le verrou 120, des nervures placées le long des deux côtés latéraux longitudinaux de ladite pièce, et sur l'autre pièce, des rainures placées le long des deux côtés latéraux longitudinaux de ladite pièce, adaptées à recevoir en coulissement lesdites nervures.

Le verrou 120 est ainsi adapté à coulisser selon une direction parallèle à l'axe longitudinal de l'embase 110. Ce faisant, il coulisse également selon une direction parallèle à l'axe longitudinal du montant.

Ici, comme le montrent les figures 8, 9, 11 et 12, les rainures 115 appartiennent à l'embase 110 tandis que les nervures 123 appartiennent au verrou 120.

En particulier, l'embase 110 comporte le long de ses deux côtés longitudinaux deux rebords 113 avec des retours 114 à angle droit, tournés l'un vers l'autre. Chaque rebord et retour associés, délimitent intérieurement une rainure 115 longitudinale. Les rebords 113 s'étendent à partir du rebord d'extrémité 119 avant de l'embase 110 sur une partie seulement de la longueur de l'embase 110. Ils s'interrompent au deux tiers environ de la longueur de l'embase 110 à distance de la partie arrière comprenant lesdits logements 111 formant paliers.

Comme cela sera expliqué plus en détail ultérieurement, les rainures 115 sont localement interrompues par une encoche 116 pour autoriser le positionnement du verrou 120 sur l'embase 110.

Par ailleurs, comme le montrent plus particulièrement les figures 9 et 10, l'embase 110 comporte dans la partie centrale de son fond 110A, une fenêtre 110B dans laquelle s'étend librement une languette 117 dont la racine, formant une charnière de pivotement, est rattachée au bord arrière de la fenêtre 110B. Cette languette 117 est courbée (bombée) avec une concavité tournée vers le fond 110A de l'embase 110 et comporte deux creux 117A, 117B définissant les deux positions stables du verrou 120 sur l'embase 110. L'un des deux creux 117A situé à proximité de la racine de la languette 117 définit la première position stable du verrou 120, tandis que l'autre creux 117B situé à proximité de l'extrémité libre de la languette 117 définit la deuxième position stable du verrou 120.

À la racine de la languette 117, l'embase 110 comporte une butée droite 118 qui s'élève au droit du premier creux 117A en formant une saillie sur le fond 110A de l'embase 110. Le dos de la butée droite 118 se raccorde par une pente douce 118A au fond 110A de l'embase 110 (voir figure 10).

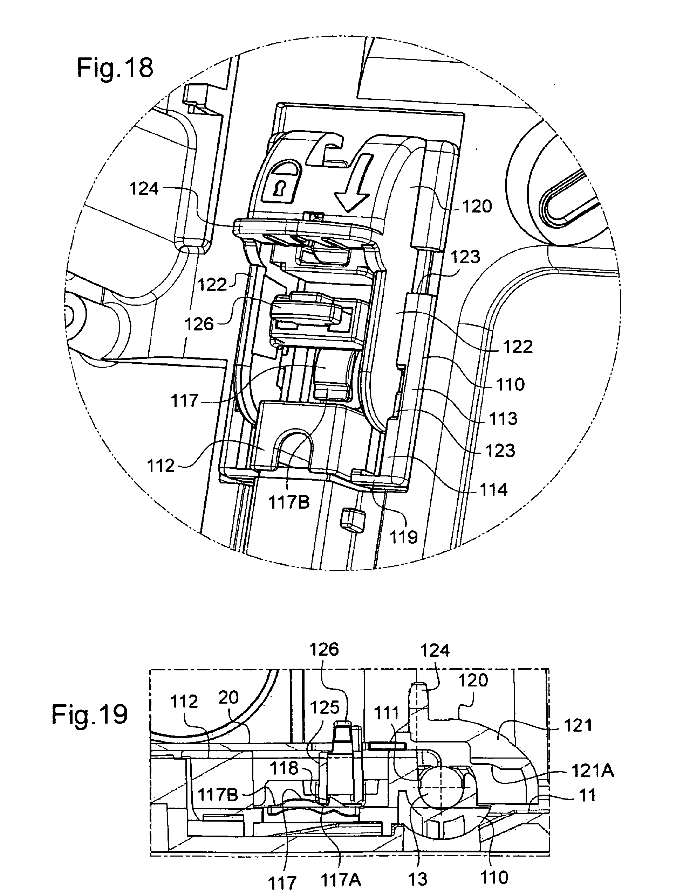

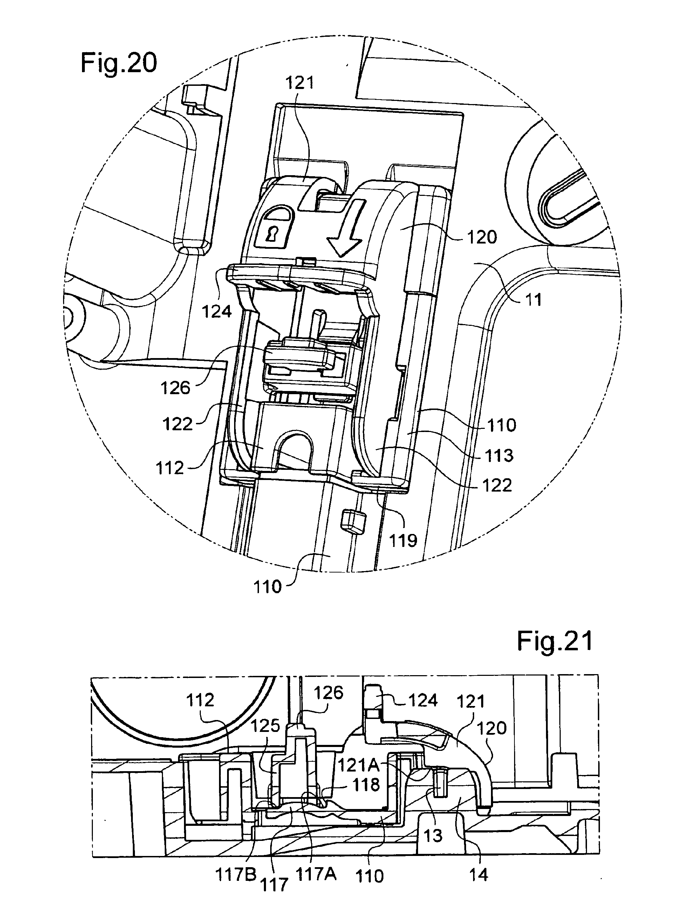

Comme le montrent plus particulièrement les figures 6, 7, 11, 12, 19 et 21, le verrou 120 comporte, à l'arrière, du côté dudit axe de pivotement 13, un capot 121, ici de forme bombée, ouvert en direction de l'embase 110, le verrou 120 étant agencé sur l'embase 110 de manière que, dans sa première position stable (figures 6 et 19), le verrou 120 dépasse de l'embase 110 de sorte que son capot 121 est décalé par rapport audit axe de pivotement 13, et, dans sa deuxième position stable (figures 7 et 21), le verrou 120 est contenu dans l'embase 110 de sorte que son capot 121 est placé en regard dudit axe de pivotement, une partie de sa face intérieure 121A fermant les logements d'accueil prévus sur l'embase 110.

Le verrou 120 comporte deux ailes latérales 122 parallèles qui s'étendent vers l'avant à partir du capot 121. Chaque aile latérale 122 porte, à sa base, sur sa face externe, deux nervures 123 alignées le long de ladite aile et espacées l'une de l'autre. L'une des nervures 123 est située à l'extrémité avant de l'aile latérale 122 tandis que l'autre est située à proximité du capot 121 en avant de celui-ci. Ces nervures 123 sont les moyens de translation du verrou 120 destinées à coulisser dans les rainures 115 de l'embase 110 (voir figures 11 et 12).

Comme le montrent les figures 11, 12, 19 et 21, le verrou 120 comporte un élément 125 qui s'étend entre les deux ailes latérales 122. Il s'agit d'un élément de retenue 125 du montant 20 correspondant, adapté à naviguer sur la languette 117 courbée de ladite embase 110, entre les deux creux 117A, 117B de cette languette 117 qui forment les deux positions stables du verrou 120. Ledit élément de retenue 125 comporte une partie 126 en forme de T destinée à traverser la partie large de l'ouverture 24 du montant 20, lorsque ledit verrou 120 est placé dans sa première position stable (voir figure 6), et à s'engager dans la partie étroite (l'encoche) de cette ouverture 24, lorsque le verrou 120 est placé dans sa deuxième position stable, pour que la tête de la partie 126 en forme de T s'étende au-dessus dudit montant 20 (voir figure 7).

Le verrou 120 comporte en saillie sur le bord avant de son capot 121 une poignée 124 de préhension manuelle.

En référence aux figures 13 à 23, nous allons maintenant décrire la mise en place d'un dispositif de montage 100 sur le fond 11 du boîtier 10 du coffret électrique ainsi que son utilisation avantageuse pour monter sans outil et basculer facilement, à la demande, vers le haut ou vers le bas, le châssis 2 sur le fond 11 du boîtier 10 dudit coffret.

En premier lieu, l'installateur présente l'embase 110 du dispositif de montage 100, perpendiculairement au fond 11 du boîtier 10 afin d'engager les logements 111 de l'embase 110 sur l'axe de pivotement 13 du boîtier 10 (voir figure 13).

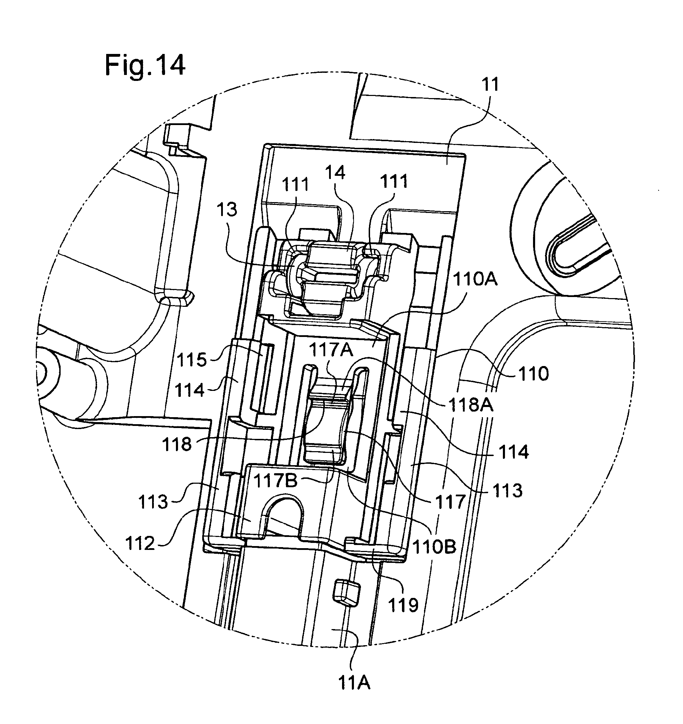

Puis, il bascule l'embase 110 autour de l'axe de pivotement 13 pour la positionner contre le fond 11 du boîtier 10 en regard de l'extrémité de la nervure 11A correspondante du boîtier 10 (voir figure 14). Dans cette position, la plate-forme 112 de l'embase 110 s'étend sensiblement dans la continuité de la face supérieure de la nervure 11A.

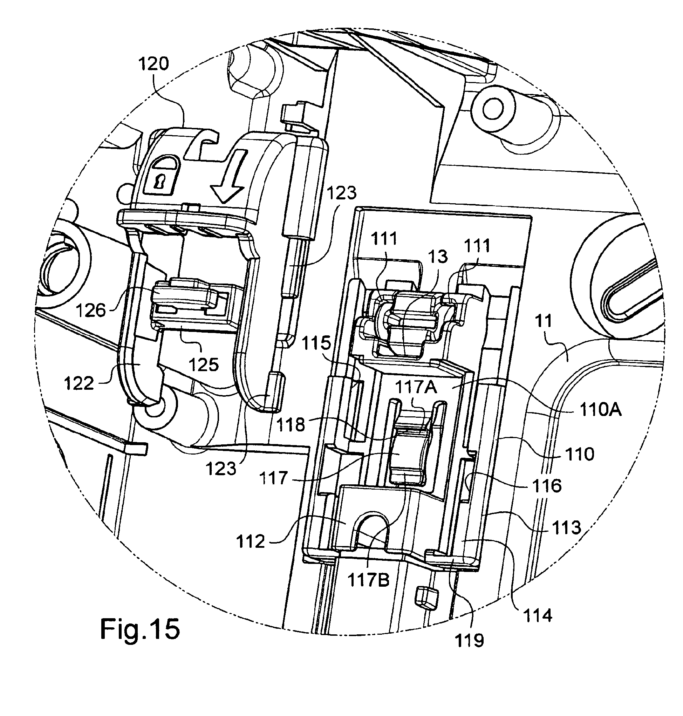

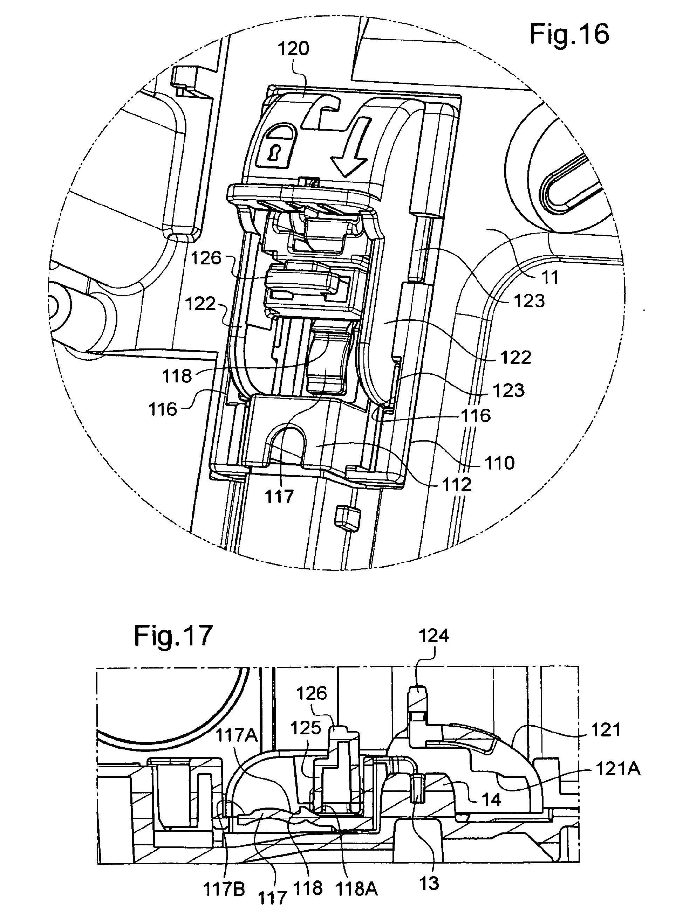

L'installateur présente alors le verrou 120 sur l'embase 110 (voir figure 15) et il engage les nervures 123 du verrou 120 dans les encoches 116 correspondantes de l'embase 110 de sorte qu'elles sont prêtes à être coulissées dans les rainures 115 de l'embase (voir figure 16). Dans cette position, l'élément de retenue 125 du verrou 120 est placé au pied de la pente 118A présente au dos de la butée 118 de l'embase 110 (voir figure 17).

Il translate alors le verrou 120 sur l'embase 110, en le tirant par la poignée 124 de sorte que l'élément de retenue 125 franchit la butée droite 118 et se positionne dans le creux 117A de la languette 117, dans sa première position stable (voir figures 18 et 19). Dans cette position, le verrou 120 et l'embase 110 sont assemblés de manière indémontable car l'élément de retenue 125 est en appui contre la butée droite 118 et il ne peut plus franchir en arrière cette butée droite 118. Dans cette première position stable, comme le montre la figure 19, le verrou 120 laisse libre l'extrémité libre du montant 20 rapportée sur l'embase 110 et son capot 121 s'étend en arrière de l'embase 110 en étant décalé par rapport à l'axe de pivotement 13 emprisonné dans les logements 111 de l'embase 110. Ainsi, l'installateur ne peut pas pivoter le dispositif de montage 100 autour de l'axe de pivotement 13 car le capot 121 du verrou 120 bute contre le fond 11 du boîtier 10.

Pour solidariser l'extrémité libre du montant 20 au boîtier 10 du coffret, l'installateur tire le verrou 120 par sa poignée 124 de manière à le translater sur l'embase 110. Les nervures 123 du verrou 120 coulissent dans les rainures 115 de l'embase 110 et l'élément de retenue 125 navigue sur la languette 117 courbée de l'embase 110 de manière à sortir du premier creux 117A de la languette 117 et à s'engager dans l'autre creux 117B prévu à l'extrémité libre de la languette 117, dans sa deuxième position stable (voir figures 20, 21). Dans cette deuxième position stable, la partie 126 en forme de T de l'élément de retenue 125 du verrou 120, est engagée dans la partie étroite de l'ouverture 24 du montant 20 de sorte que la tête de ladite partie 126 s'étend au-dessus dudit montant 20. Une partie du capot 121 du verrou 120 recouvre également une partie du montant 20 de sorte que ledit montant 20 est emprisonné entre le verrou 120 et l'embase 110 (voir figure 7). Dans cette deuxième position stable également, le verrou 120 est contenu dans l'embase 110 de sorte que son capot 121 est placé en regard dudit axe de pivotement 13 en fermant lesdits logements d'accueil prévus sur l'embase 110 (voir figure 21). L'installateur peut alors facilement pivoter le dispositif de montage 100 sur le fond 11 du boîtier 10 autour de son axe de pivotement 13 puisque le capot 121 du verrou 120 ne forme plus aucun obstacle à ce pivotement.

La libération du montant 20 emprisonné dans le dispositif de montage 100 placé à plat contre le fond 11 du boîtier 10, s'effectue très facilement par un mouvement de translation inverse du verrou 120 depuis sa deuxième position stable vers sa première position stable.

Comme le montre la figure 1, l'installateur peut très facilement monter le châssis 2 dans le boîtier 10 du coffret électrique en présentant les extrémités des montants 20 de ce châssis sur les embases 110 des dispositifs de montage 100 rapportés sur le fond 11 du boîtier 10 et placés dans leur première position stable. Les encoches 25 des montants 20 s'engagent sur les rebords d'extrémité avant 119 dans embases 110 et lesdites extrémités libres de ces montants 20 prennent appui sur les plates-formes 112 desdites embases 110.

Puis, l'installateur verrouille les dispositifs de montage sur les montants 20 comme cela a été expliqué précédemment, en translatant les verrous 120 sur les embases 110.

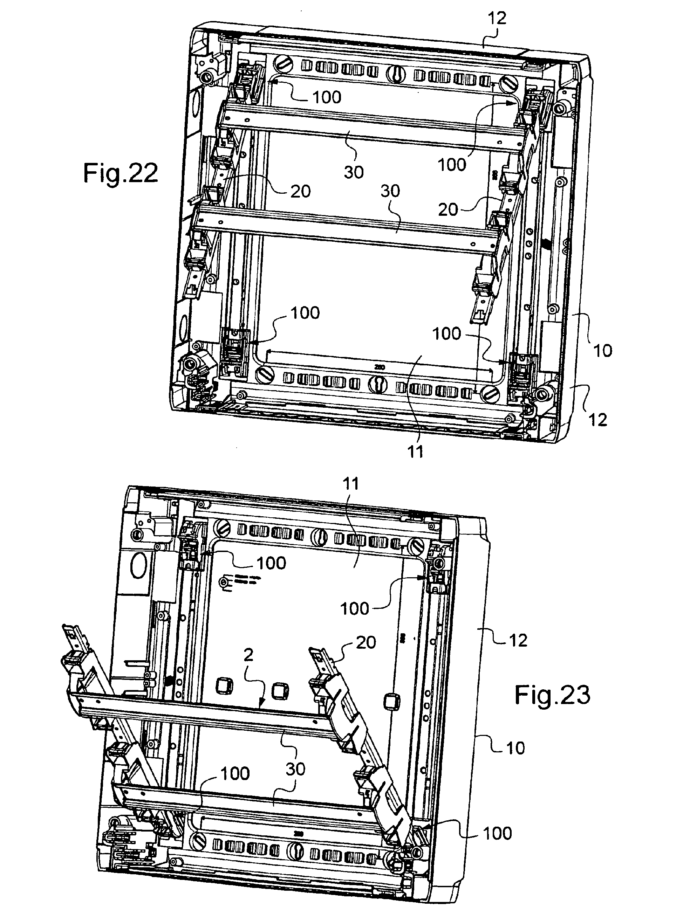

Pour câbler facilement les appareils électriques (non représentés) rapportés sur les rails transversaux 30 du châssis 2, l'installateur peut faire basculer le châssis 2 vers le haut (voir figure 22) ou vers le bas (voir figure 23) en libérant les extrémités hautes ou les extrémités basses des montants 20 du châssis des dispositifs de montages 100 hauts ou bas correspondants. Une fois que le câblage est terminé, l'installateur bascule de nouveau le châssis 2 pour le placer contre le fond 11 du boîtier 10 et verrouille les dispositifs de montage 100 sur les extrémités libres correspondantes des montants 20 du châssis.

## Revendications

1. Dispositif de montage (100) d'un montant (20) de châssis (2) sur le fond (11) d'un coffret ou d'un tableau électrique, qui comprend une embase (110) comportant des moyens de réception (112, 119) d'une extrémité libre dudit montant (20), et un verrou (120) comportant des moyens de translation (123) adaptés à coopérer avec des moyens de translation complémentaires (115) de l'embase (110) pour être translaté par rapport à l'embase (110) selon un axe longitudinal de l'embase (110), entre une première position dans laquelle il laisse libre ladite extrémité dudit montant (20) et une deuxième position, appelée position de montage, **caractérisé en ce que** lesdites première et deuxième positions du verrou (120) sont des positions stables et **en ce que** ladite deuxième position est une position dans laquelle le verrou (120) emprisonne ladite extrémité libre dudit montant (20) entre ledit verrou (120) et ladite embase (110).

2. Dispositif de montage (100) selon la revendication 1, dans lequel l'embase (110) et le verrou (120) sont agencés pour être rapportés l'un sur l'autre de manière indémontable.

3. Dispositif de montage (100) selon l'une des revendications 1 et 2, dans lequel ladite embase (110) est destinée à être rapportée sur ledit fond ou vient de formation avec celui-ci.

4. Dispositif de montage (100) selon l'une des revendications 1 à 3, dans lequel le verrou (120) comporte un élément de retenue (125) dudit montant, adapté à naviguer sur une languette (117) courbée de ladite embase (110), entre deux creux (117A, 117B) de cette languette (117) qui forment les deux positions stables du verrou.

5. Dispositif de montage (100) selon la revendication précédente, dans lequel ladite languette (117) porte au droit du creux (117A) définissant ladite première position stable, une butée droite (118) contre laquelle ledit élément de retenue (125) prend appui lorsqu'il est engagé dans ledit creux (117A).

6. Dispositif de montage (100) selon l'une des revendications 4 et 5, dans lequel ledit élément de retenue (125) comporte une partie (126) en forme de T destinée à traverser la partie large d'une ouverture (24) dudit montant (20), lorsque ledit verrou (120) est placé dans sa première position stable, et à s'engager dans une partie étroite de cette ouverture (24), lorsque le verrou (120) est placé dans sa deuxième position stable, pour que la tête de la partie (126) en forme de T s'étende au-dessus dudit montant (20).

7. Dispositif de montage (100) selon l'une quelconque des revendications précédentes, dans lequel lesdits moyens de translation comprennent sur l'une des deux pièces constituées par l'embase (110) et le verrou (120), des nervures (123) placées le long des deux côtés latéraux longitudinaux de ladite pièce, et sur l'autre pièce, des rainures (115) placées le long des deux côtés latéraux longitudinaux de ladite pièce, adaptées à recevoir en coulissement lesdites nervures.

8. Dispositif de montage (100) selon la revendication précédente, dans lequel les rainures (115) sont localement interrompues pour autoriser le positionnement du verrou (120) sur l'embase (110).

9. Dispositif de montage (100) selon l'une des deux revendications précédentes, dans lequel les rainures (115) appartiennent à l'embase (110) tandis que les nervures (123) appartiennent au verrou (120).

10. Dispositif de montage (100) selon l'une quelconque des revendications précédentes, dans lequel le verrou (100) comporte en saillie une poignée (124) de préhension manuelle.

11. Dispositif de montage (100) selon l'une quelconque des revendications précédentes, dans lequel les moyens de réception de l'embase comprennent une plate-forme (112) de support du montant, placée à proximité d'un rebord d'extrémité (119) de l'embase, destiné à s'engager dans une encoche (25) du montant (20).

12. Dispositif de montage (100) selon l'une quelconque des revendications précédentes, dans lequel le verrou (120) et l'embase (110) sont réalisés par moulage d'une matière plastique.

13. Ensemble comprenant un montant (20) de châssis équipé à chaque extrémité d'un dispositif de montage (100) selon l'une des revendications 1 à 12, le montant se présentant sous la forme d'un profilé (20) en matière métallique, de section en U avec un fond (21) et deux ailes latérales longitudinales (22), à chaque extrémité du montant, d'une part, le fond (21) du profilé (20) comportant une ouverture (24) présentant une forme globalement rectangulaire et une largeur nominale (L1), le bord de ladite ouverture (24) situé à l'opposé du bord situé du côté du bord coupé (23) du profilé (20), étant pourvu d'une encoche de largeur (L2) inférieure à la largeur nominale (L1), et, d'autre part, chaque aile latérale longitudinale (22) du profilé (20) comportant une encoche.

14. Coffret électrique comprenant un boîtier (10) qui loge un châssis (2) comportant deux montants (20) verticaux reliés par des rails transversaux (40) parallèles destinés à supporter des appareils électriques, et des dispositifs de montage (100) selon l'une des revendications 1 à 12, qui coopèrent avec les extrémités libres des montants (20) du châssis pour le montage dudit châssis (2) sur le fond (11) du boîtier (10).

## Claims

1. A mounting device (100) for mounting an upright (20) of a frame (2) on the back wall (11) of an electrical panel or box, which device comprises a base (110) including reception means (112, 119) for receiving a free end of said upright (20), and a latch (120) including translation means (123) that are adapted to co-operate with complementary translation means (115) of the base (110) so as to move in translation relative to the base (110) along a longitudinal axis of the base (110), between a first position in which it leaves said end of said upright (20) free, and a second position, referred to as the assembled position, said device being **characterized in that** said first and second positions of the latch (120) are stable positions, and **in that** said second position is a position in which the latch (120) holds said free end of said upright (20) captive between said latch (120) and said base (110).

2. A mounting device (100) according to claim 1, wherein the base (110) and the latch (120) are arranged so as to be fitted one on the other in non-removable manner.

3. A mounting device (100) according to claim 1 or claim 2, wherein said base (110) is for fitting on said rear face or is formed integrally therewith.

4. A mounting device (100) according to any one of claims 1 to 3, wherein the latch (120) includes a retaining element (125) for retaining said upright, which retaining element is adapted to navigate over a curved tongue (117) of said base (110), between two hollows (117A, 117B) of the tongue (117) that form the two stable positions of the latch.

5. A mounting device (100) according to the preceding claim, wherein, in register with the hollow (117A) defining said first stable position, said tongue (117) carries a straight abutment (118) against which said retaining element (125) bears when it is engaged in said hollow (117A).

6. A mounting device (100) according to claim 4 or claim 5, wherein said retaining element (125) includes a T-shaped portion (126) for passing through the wide portion of an opening (24) of said upright (20) when said latch (120) is positioned in its first stable position, and for engaging in a narrow portion of the opening (24) when the latch (120) is positioned in its second stable position, so that the head of the T-shaped portion (126) extends above said upright (20).

7. A mounting device (100) according to any preceding claim, wherein said translation means comprise, on one of the two parts constituted by the base (110) and the latch (120), ribs (123) that are positioned along two longitudinal lateral sides of said part, and on the other part, grooves (115) that are positioned along two longitudinal lateral sides of said part, and that are adapted to receive said ribs in sliding.

8. A mounting device (100) according to the preceding claim, wherein the grooves (115) are interrupted locally so as to enable the latch (120) to be positioned on the base (110).

9. A mounting device (100) according to any one of the two preceding claims, wherein the grooves (115) form part of the base (110), while the ribs (123) form part of the latch (120).

10. A mounting device (100) according to any preceding claim, wherein the latch (120) includes a projecting handle (124).

11. A mounting device (100) according to any preceding claim, wherein the reception means of the base include a support platform (112) for supporting the upright, which platform is positioned in the proximity of an end rim (119) of the base, and which end rim is for engaging in a notch (25) of the upright (20).

12. A mounting device (100) according to any preceding claim, wherein the latch (120) and the base (110) are made by molding a plastics material.

13. An assembly comprising an upright (20) of a frame (2) fitted at each end with a mounting device (100) according to any one of claims 1 to 12, the upright being in the form of a metal section member (20) of channel section with a web (21) and two longitudinal flanges (22), with, at each end of the upright, firstly the web (21) of the section member (20) having an opening (24) of generally rectangular shape and a nominal width (L1), the edge of said opening (24) situated remote from the edge situated beside the cut edge (23) of the section member (20) being provided with a notch of width (L2) less than the nominal width (L1), and secondly each longitudinal flange (22) of the section member (20) including a notch.

14. An electrical box comprising: a casing (10) housing a frame (2) having two vertical uprights (20) connected together by parallel transverse rails (40) for supporting electrical equipment; and mounting devices (100) according to any one of claims 1 to 12 that co-operate with the free ends of the uprights (20) of the frame for mounting said frame (2) on the back wall (11) of the casing (10).

## Patentansprüche

1. Montagevorrichtung (100) für einen Gestellträger (2) (20) am Boden (11) eines elektrischen Verteilerkastens oder einer elektrischen Verteilertafel, die einen Sockel (110) mit Aufnahmemitteln (112, 119) für ein freies Ende des Trägers (20) sowie einen Riegel (120) mit Verschiebemitteln (123) umfasst, die sich dazu eignen, mit komplementären Verschiebemitteln (115) des Sockels (100) zusammenzuwirken, um in Bezug zum Sockel (110) entlang einer Längsachse des Sockels (110) zwischen einer ersten Position, in der das Ende des Trägers (20) frei gelassen wird, und einer zweiten als Montageposition bezeichneten Position, verschoben zu werden, **dadurch gekennzeichnet, dass** die erste und zweite Position des Riegels (120) stabile Positionen sind und dadurch, dass die zweite Position eine Position ist, in der der Riegel (120) das freie Ende des Trägers (20) zwischen dem Riegel (120) und dem Sockel (110) einsperrt.

2. Montagevorrichtung (100) nach Anspruch 1, bei der der Sockel (110) und der Riegel (120) angeordnet sind, um nicht demontierbar aufeinandergesetzt zu werden.

3. Montagevorrichtung (100) nach einem der Ansprüche 1 und 2, bei der der Sockel (110) dazu bestimmt ist, auf dem Boden aufgesetzt zu werden oder zusammen mit ihm geformt wird.

4. Montagevorrichtung (100) nach einem der Ansprüche 1 bis 3, bei der der Riegel (120) ein Rückhalteelement (125) für den Träger umfasst, das sich auf einer gewölbten Zunge (117) des Sockels (110) zwischen zwei Vertiefungen (117A, 117B) dieser Zunge (117), die die beiden stabilen Positionen des Riegels bilden, hin und her bewegen kann.

5. Montagevorrichtung (100) nach vorausgehendem Anspruch, bei der die Zunge (117) an die Vertiefung (117A) anschließend, die die erste stabile Position definiert, einen geraden Anschlag (118) aufweist, an dem das Rückhalteelement (125) zum Aufliegen kommt, wenn es in die Vertiefung (117A) eingreift.

6. Montagevorrichtung (100) nach einem der Ansprüche 4 und 5, bei der das Rückhalteelement (125) ein Teil (126) in T-Form umfasst, das dazu bestimmt ist, den breiten Bereich einer Öffnung (24) des Trägers (20) zu durchqueren, wenn der Riegel (120) in seiner ersten stabilen Position angeordnet ist, und in einen schmalen Bereich dieser Öffnung (24) einzugreifen, wenn der Riegel (120) in seiner zweiten stabilen Position angeordnet ist, damit sich der Kopf des Teils (126) in T-Form über diesen Träger (20) erstreckt.

7. Montagevorrichtung (100) nach einem beliebigen der vorausgehenden Ansprüche, bei der die Verschiebemittel auf einem der beiden durch den Sockel (110) und den Riegel (120) gebildeten Teile entlang der zwei seitlichen Längsseiten des Teils Rippen (123) und auf dem anderen Teil entlang der zwei seitlichen Längsseiten des Teils Rillen (115) umfasst, die die Rippen gleitend aufnehmen können.

8. Montagevorrichtung (100) nach vorausgehendem Anspruch, bei der die Rillen (115) stellenweise unterbrochen sind, um das Positionieren des Riegels (120) auf dem Sockel (110) zu ermöglichen.

9. Montagevorrichtung (100) nach einem der zwei vorausgehenden Ansprüche, bei der die Rillen (115) zum Sockel (110) gehören, während die Rippen (123) zum Riegel (120) gehören.

10. Montagevorrichtung (100) nach einem beliebigen der vorausgehenden Ansprüche, bei der der Riegel (100) hervorstehend einen Griff (124) zum Erfassen mit der Hand umfasst.

11. Montagevorrichtung (100) nach einem beliebigen der vorausgehenden Ansprüche, bei der die Aufnahmemittel für den Sockel eine Stützplattform (112) für den Träger umfassen, die in der Nähe einer Endkante (119) des Sockels, die in eine Raste (25) des Trägers (20) eingreift, angebracht ist.

12. Montagevorrichtung (100) nach einem beliebigen der vorausgehenden Ansprüche, bei der der Riegel (120) und der Sockel (110) durch einen Kunststoffguss hergestellt werden.

13. Einheit mit einem Gestellträger (20), der an jedem Ende mit einer Montagevorrichtung (100) nach einem der Ansprüche 1 bis 12 ausgestattet ist, wobei der Träger in Form eines Metallprofilteils (20) mit U-Querschnitt mit einem Boden (21) und zwei seitlichen Längsflügeln (22) vorliegt und an jedem Ende des Trägers der Boden (21) des Profilteils (20) zum einen eine Öffnung (24) mit einer im wesentlichen rechteckigen Form und einer Nennbreite (L1) umfasst, wobei sich der Rand dieser Öffnung (24) zum Rand auf der Seite des abgeschnittenen Rands (23) des Profilteils (20) gegenüberliegend befindet und mit einer Rastung versehen ist, deren Breite (L2) geringer ist als die Nennbreite (L1) und wobei zum anderen jeder seitliche Längsflügel (22) des Profilteils (20) eine Rastung umfasst.

14. Elektrischer Kasten mit einem Gehäuse (10), das ein Gestell (2) mit zwei senkrechten Trägern (20) aufnimmt, die durch parallele Querschienen (40) miteinander verbunden und dazu bestimmt sind, elektrische Geräte und Montagevorrichtungen (100) nach einem der Ansprüche 1 bis 12 zu halten, die mit den freien Enden der Träger (20) des Gestells für die Montage des Gestells (2) auf dem Boden (11) des Gehäuses (10) zusammenwirken.
